# EUROPEAN PATENT APPLICATION

(11) **EP 4 538 298 A1**
(43) Date of publication of application: **16.04.2025**
(21) Application number: 23819445.0
(22) Date of filing: 01.03.2023
(51) Int. Cl.: C08B 15/06, D06M 101/08, D21H 11/18, D21H 11/20, D21H 15/02, D06L 4/13, D06M 11/50

(54) **METHOD FOR PRODUCING CARBAMATED CELLULOSE FIBERS AND METHOD FOR PRODUCING CARBAMATED CELLULOSE FINE FIBERS**

(30) Priority: 10.06.2022 JP 2022094568
(71) Applicant: Daio Paper Corporation, Ehime 799-0492 (JP)
(72) Inventor: AOKI, Ryunosuke, Shikokuchuo-shi, Ehime 799-0492 (JP); MATSUSUE, Ikko, Shikokuchuo-shi, Ehime 799-0492 (JP); IMAI, Takaaki, Shikokuchuo-shi, Ehime 799-0492 (JP)
(74) Representative: Meissner Bolte Partnerschaft mbB
(86) International application number: PCT/JP2023/007627
(87) International publication number: WO 2023/238458

(57) **Abstract**

Provided is a method for preparing carbamated cellulose fibers or carbamated cellulose fine fibers, having a higher brightness, without impairing reinforcing effect of the fibers on resin. The method includes adding a bleaching agent to carbamated cellulose fibers, and bleaching the carbamated cellulose fibers with the bleaching agent at a reaction temperature of 90 degrees or lower at pH 7 or lower. Carbamated cellulose fibers obtained from this method and having 0.5 mmol/g or more carbamate groups introduced therein are made finer so that the resulting carbamated cellulose fine fibers have an average fiber width of 0.1 to 20 µm, an average fiber length of 0.1 to 2.0 mm, and a fine percentage A of 10 to 90%.

## Description

### FIELD OF THE INVENTION

The present invention relates to a method for preparing carbamated cellulose fibers and a method for preparing carbamated cellulose fine fibers.

### BACKGROUND ART

Fine fibers, such as cellulose nanofibers and microfiber cellulose (microfibrillated cellulose), have hitherto been attracting attention as a reinforcing material for resin. However, for using fine fibers as a reinforcing material for resin (forming a composite), there have been difficulties in dispersing fine fibers, which are hydrophilic, whereas resin is hydrophobic. Thus, the present inventors have proposed substitution of hydroxy groups of fine fibers with carbamate groups (carbamation) (Patent Publication 1). According to this proposal, dispersibility of fine fibers is improved and thus the reinforcing effect on resin is enhanced.

However, carbamation of cellulose fibers is accompanied by a coloring (browning) problem, and the brownish color remains even after the cellulose fibers are made into a composite with resin. In order to eliminate the coloring, it is conceivable to bleach the cellulose fibers, but mere bleaching reduces the amount of carbamate groups introduced into the cellulose fibers, which impairs the reinforcing effect on resin.

### PRIOR ART PUBLICATIONS

### PATENT PUBLICATION

Patent Publication 1: JP 2019-001876 A

### SUMMARY OF THE INVENTION

### PROBLEMS TO BE SOLVED BY THE INVENTION

It is an object of the present invention to provide a method for preparing carbamated cellulose fibers or carbamated cellulose fine fibers, having a higher brightness, without impairing the reinforcing effect on resin.

### MEANS FOR SOLVING THE PROVLEM

Means for solving the problem is a method for preparing carbamated cellulose fibers including adding a bleaching agent to carbamated cellurose fibers, and bleaching the carbamated cellulose fibers with the bleaching agent at a reaction temperature of 90 degrees or lower at pH 7 or lower. The means is also a method for preparing carbamated cellulose fine fibers including making carbamated cellulose fibers finer, wherein the carbamated cellulose fibers are carbamated cellulose fibers obtained from the above-mentioned method and having 0.5 mmol/g or more carbamate groups introduced therein, and wherein the making carbamated cellulose fibers finer is effected so that the resulting carbamated cellulose fine fibers have an average fiber width of 0.1 to 20 µm, an average fiber length of 0.1 to 2.0 mm, and a fine percentage A of 10 to 90%.

### EFFECT OF THE INVENTION

According to the present invention, there is provided a method for preparing carbamated cellulose fibers or carbamated cellulose fine fibers, having a higher brightness, without impairing the reinforcing effect on resin.

### DESCRIPTION OF THE INVENTION

Next, embodiments for carrying out the present invention are discussed. It should be noted that the present embodiments are mere examples of the present invention, and the scope of the present invention is not limited by the scopes of the present embodiments.

The method according to an aspect of the present invention is characterized by adding a bleaching agent to carbamated cellulose fibers, and bleaching the carbamated cellulose fibers with the bleaching agent at a reaction temperature of 90 degrees or lower at pH7 or lower. The method according to another aspect of the present invention is characterized by making finer the carbamated cellulose fibers thus obtained so that the resulting carbamated cellulose fine fibers have an average fiber width of 0.1 to 20 µm, an average fiber length of 0.1 to 2.0 mm, and a fine percentage A of 10 to 90%. Here, the carbamated cellulose fibers have 0.5 mmol/g or more carbamate groups introduced therein. Detailed discussions are made hereinbelow.

### <Cellulose Fibers>

Cellulose fibers (fibrous cellulose) are made from pulp. This raw material pulp may be one or more members selected and used from the group consisting of, for example, wood pulp made from hardwood, softwood, or the like; non-wood pulp made from straw, bagasse, cotton, hemp, bast fibers, or the like; and de-inked pulp (DIP) made from recovered used paper, waste paper, or the like. These raw materials may be in the form of, for example, a ground product (powdered product), such as so called cellulose-based powder.

In this regard, however, the raw material pulp is preferably wood pulp in order to avoid contamination of impurities as much as possible. As the wood pulp, one or more members may be selected and used from the group consisting of, for example, chemical pulp, such as hardwood kraft pulp (LKP), softwood kraft pulp (NKP), or the like, mechanical pulp (TMP), and the like.

The hardwood kraft pulp may be hardwood bleached kraft pulp, hardwood unbleached kraft pulp, or hardwood semi-bleached kraft pulp. Similarly, the softwood kraft pulp may be softwood bleached kraft pulp, softwood unbleached kraft pulp, or softwood semi-bleached kraft pulp.

As the mechanical pulp, one or more members may be selected and used from the group consisting of, for example, stone ground pulp (SGP), pressurized stone ground pulp (PGW), refiner ground pulp (RGP), chemi-ground pulp (CGP), thermo-ground pulp (TGP), ground pulp (GP), thermomechanical pulp (TMP), chemithermomechanical pulp (CTMP), refiner mechanical pulp (RMP), and bleached thermomechanical pulp (BTMP).

### <Carbamation>

Cellulose fibers are made into carbamated cellulose fibers through carbamation, i.e., made to have carbamate groups.

Here, having carbamate groups means that carbamate groups (ester of carbamic acid) have been introduced into fibrous cellulose. Carbamate groups are represented by -O-CO-NH-, and may be, for example, -O-CO-NH₂, -O-CONHR, or - O-CO-NR₂. In other words, carbamate groups are represented by the following structural formula (1):

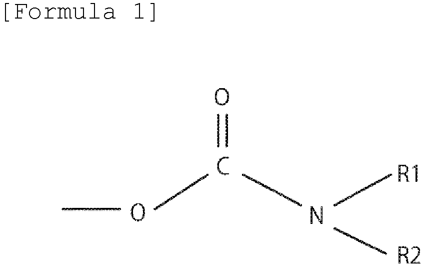

In the formula, R is independently at least any of a saturated straight chain hydrocarbon group, a saturated branched hydrocarbon group, a saturated cyclic hydrocarbon group, an unsaturated straight chain hydrocarbon group, an unsaturated branched hydrocarbon group, an aromatic group, and derivative groups thereof.

The saturated straight chain hydrocarbon group may be, for example, a straight chain alkyl group having 1 to 10 carbon atoms, such as a methyl group, an ethyl group, or a propyl group.

The saturated branched hydrocarbon group may be, for example, a branched alkyl group having 3 to 10 carbon atoms, such as an isopropyl group, a sec-butyl group, an isobutyl group, or a tert-butyl group.

The saturated cyclic hydrocarbon group may be, for example, a cycloalkyl group, such as a cyclopentyl group, a cyclohexyl group, or a norbornyl group.

The unsaturated straight chain hydrocarbon group may be, for example, a straight chain alkenyl group having 2 to 10 carbon atoms, such as an ethenyl group, a propene-1-yl group, or a propene-3-yl group, or a straight chain alkynyl group having 2 to 10 carbon atoms, such as an ethynyl group, a propyn-1-yl group, or a propyn-3-yl group.

The unsaturated branched hydrocarbon group may be, for example, a branched alkenyl group having 3 to 10 carbon atoms, such as a propene-2-yl group, a butene-2-yl group, or a butene-3-yl group, or a branched alkynyl group having 4 to 10 carbon atoms, such as a butyne-3-yl group.

The aromatic group may be, for example, a phenyl group, a tolyl group, a xylyl group, or a naphthyl group.

The derivative groups may be a saturated straight chain hydrocarbon group, a saturated branched hydrocarbon group, a saturated cyclic hydrocarbon group, an unsaturated straight chain hydrocarbon group, an unsaturated branched hydrocarbon group, or an aromatic group, of which one or a plurality of hydrogen atoms are substituted with substituents (for example, a hydroxy group, a carboxy group, or a halogen atom).

In the cellulose fibers having carbamate groups (having carbamate groups introduced), part or all of highly polar hydroxy groups have been substituted with relatively lowly polar carbamate groups. Thus, such cellulose fibers have higher affinity to resins having lower polarity or the like. As a result, the cellulose fibers having carbamate groups have excellent homogeneous dispersibility in resin. Further, a slurry of such cellulose fibers having carbamate groups is low in viscosity and excellent in handleability.

The degree of substitution of the hydroxy groups of cellulose fibers with carbamate groups (amount of carbamate groups introduced) is preferably 0.1 to 5.0 mmol/g, more preferably 0.6 to 3.0 mmol/g, particularly preferably 0.7 to 2.0 mmol/g. At a degree of substitution of 0.5 mmol/g or higher, flexural elongation, in particular, of resin may certainly be improved as a result of the introduction of carbamate groups. On the other hand, at a degree of substitution over 5.0 mmol/g, the cellulose fibers may not be able to maintain the fibrous form, and sufficient reinforcing effect on resin may not be produced. Further, a degree of substitution over 5.0 mmol/g may lead to a lower brightness, so that the brightness may be as low as less than 70% even after bleaching. A degree of substitution with carbamate groups over 2.0 mmol/g may shorten the average fiber length of the raw material pulp, resulting in the average fiber length of the fine fibers below 0.1 mm, which may not produce sufficient reinforcing effect on resin.

Introduction of carbamate groups is preferably effected so that the percentage of decrease in the amount of introduced carbamate groups after bleaching is less than 10% with respect to the amount of introduced carbamate groups before bleaching. With the percentage of decrease of less than 10%, decrease in the amount of fibers having carbamate groups may not be significant and, with the fibers having carbamate groups dispersed throughout the resin, adhesivity between the resin and the fibers is improved to produce a sufficient reinforcing effect when the fibers are made into a composite with the resin.

The percentage of decrease mentioned above is determined by the formula:(amount of introduced carbamate groups after bleaching - amount of introduced carbamate groups before bleaching) / amount of introduced carbamate groups after bleaching × 100 (%)

Note that the degree of substitution with carbamate groups (mmol/g) refers to the amount of carbamate groups by mole contained in 1 g of the cellulose raw material having carbamate groups. The degree of substitution with carbamate groups is determined by measuring the amount of nitrogen atoms present in carbamated pulp by Kjeldahl method, and calculating the rate of carbamation per unit mass. Note that cellulose is a polymer having anhydroglucose as a structural unit, wherein one structural unit includes three hydroxy groups.

The process of carbamating cellulose fibers may generally be divided into, for example, a mixing step, a removing step, and a heating step. Here, the mixing step and the removing step may collectively be referred to as a preparation step wherein a mixture to be subjected to the heating step is prepared.

In the mixing step, the cellulose fibers and urea or derivatives thereof (sometimes referred to simply as "urea and the like" hereinbelow) are mixed in a dispersion medium. Alternatively, the urea and the like may be mixed with the cellulose fibers by impregnating a dried product of cellulose fibers in the form of a sheet or the like with the urea and the like, or by applying the urea and the like to the dried product of cellulose fibers in the form of a sheet or the like.

The urea or the derivatives thereof may be, for example, urea, thiourea, biuret, phenylurea, benzylurea, dimethylurea, diethylurea, tetramethylurea, or compounds obtained by substituting the hydrogen atoms of urea with alkyl groups. One or a combination of a plurality of these urea or derivatives thereof may be used, and use of urea is preferred.

The lower limit of the mixing ratio by mass of the urea and the like to the cellulose fibers (urea and the like / cellulose fibers) is preferably 10 kg/pt, more preferably 20 kg/pt. The upper limit thereof is preferably 300 kg/pt, more preferably 200 kg/pt. With a mixing ratio by mass of 10 kg/pt or higher, the carbamation efficiency is improved. With a mixing ratio by mass over 300 kg/pt, the carbamation reaches a plateau.

The dispersion medium is usually water, but other dispersion media, such as alcohol or ether, or a mixture of water and other dispersion media may be used.

In the mixing step, for example, the cellulose fibers and the urea and the like may be added to water, the cellulose fibers may be added to an aqueous solution of the urea and the like, or the urea and the like may be added to a slurry containing the cellulose fibers. The addition may be followed by stirring for homogeneous mixing. Further, the dispersion liquid containing the cellulose fibers and the urea and the like may optionally contain other components. Alternatively, the addition may be achieved by forming the cellulose fibers into a sheet-like dried product, and applying the urea and the like to the sheet-like dried product of cellulose fibers. In this case, the sheet-like cellulose fiber product may be in the form of a wound raw material roll or a sheet drawn out of the roll, the latter of which is suitable for uniform application of the urea and the like.

In the removing step, the dispersion medium is removed from the dispersion liquid containing the cellulose fibers and the urea and the like obtained from the mixing step. By removing the dispersion medium, the urea and the like may efficiently be reacted in the subsequent heating step.

The removal of the dispersion medium is preferably carried out by volatilizing the dispersion medium under heating. In this way, only the dispersion medium may efficiently be removed, leaving the components including the urea and the like.

The lower limit of the heating temperature in the removing step is, when the dispersion medium is water, preferably 50 °C, more preferably 70 °C, particularly preferably 90 °C. At a heating temperature of 50 °C or higher, the dispersion medium may efficiently be volatilized (removed). On the other hand, the upper limit of the heating temperature is preferably 120 °C, more preferably 100 °C. At a heating temperature over 120 °C, the dispersion medium and urea may react, resulting in self-decomposition of urea.

In the removing step, duration of the heating may suitably be adjusted depending on the solid concentration of the dispersion liquid, or the like, and may specifically be, for example, 6 to 24 hours.

In the heating step following the removing step, the mixture of the cellulose fibers and the urea and the like is heat treated. In this heating step, the cellulose fibers are reacted with the urea and the like, and part or all of the hydroxy groups of the cellulose fibers are substituted with carbamate groups. More specifically, the urea and the like, when heated, is decomposed into isocyanic acid and ammonia as shown by the reaction formula (1) below, and the isocyanic acid, which is highly reactive, modifies the hydroxy groups of cellulose into carbamate groups as shown by the reaction formula (2) below.

NH₂-CO-NH₂ → H-N=C=O + NH₃ ... (1)

Cell-OH + H-N=C=O → Cell-O-CO-NH₂ ... (2)

The lower limit of the heating temperature in the heating step is preferably 120 °C, more preferably 130°C, particularly preferably the melting point of urea (about 134 °C) or higher, still more preferably 150 °C, most preferably 160 °C. At a heating temperature of 120 °C or higher, carbamation proceeds efficiently.

The upper limit of the heating temperature is preferably 280 °C, more preferably 260 °C. At a heating temperature over 280 °C, the urea and the like may be thermally decomposed, or the coloring may be significant.

The duration of the heating in the heating step may vary depending on the heating temperature or the manner of heating, and may preferably be from 1 second to 5 hours, more preferably from 3 seconds to 3 hours, particularly preferably from 5 seconds to 2 hours. The heating for over 5 hours may result in significant coloring and poor productivity.

The heating step may be performed bybringing the mixture into contact, for example, with a heating roll. Here, the heating temperature in the heating step is preferably 180 to 280 °C, more preferably 200 to 270 °C, particularly preferably 220 to 260 °C, for a duration of heating of preferably 1 to 60 seconds, more preferably 1 to 30 seconds, particularly preferably 1 to 20 seconds.

The heating step may alternatively be performed by noncontact heating, such as hot air heating or far-infrared heating. In this case, the carbamation may proceed efficiently at an elevated reaction temperature.

However, prolonged heating time leads to deterioration of cellulose fibers. Then, the pH conditions in the heating step is important. The heating step is carried out under alkaline conditions of preferably pH 9 or higher, more preferably pH 9 to 13, particularly preferably pH 10 to 12. The second best is under acidic or neutral conditions of pH 7 or lower, preferably pH 3 to 7, particularly preferably pH 4 to 7. Under the neutral conditions of pH 7 to 8, the average fiber length of the cellulose fibers may be short, which may lead to inferior reinforcing effect on resin. In contrast, under the alkaline conditions of pH 9 or higher, the cellulose fibers swell to allow penetration of urea dissolved in a dispersion medium into the fibers to cause efficient carbamation reaction, resulting in a sufficient average fiber length of the cellulose fibers being ensured. On the other hand, under the acidic conditions of pH 7 or lower, the decomposition reaction of the urea and the like into isocyanic acid and ammonia proceeds, which promotes the reaction with the cellulose fibers to cause efficient carbamation, resulting in a sufficient average fiber length of the cellulose fibers being ensured. However, it is preferred to perform the heating step under the alkaline conditions, where possible. Under the acidic conditions, acid hydrolysis of cellulose may disadvantageously proceed.

The pH adjustment may be performed by adding to the mixture an acidic compound (for example, acetic acid or citric acid) or an alkaline compound (for example, sodium hydroxide or calcium hydroxide).

For the heating in the heating step, for example, a hot air dryer, a paper machine, or a dry pulp machine may be used.

The mixture obtained from the heating step may be dehydrated and washed. The dehydration and washing may be carried out with water or the like. By this dehydration and washing, residual, unreacted urea and the like may be removed.

Here, whether the mixture has been washed thoroughly or not may be confirmed by determination of the nitrogen concentration or transparency of the filtrate (slurry), and may preferably be evaluated by the "rate of displacement washing" as will be defined below. Note in the following that the "first stage" refers to the first time that the pulp slurry before dehydration (after disintegration) is subjected to a dehydration step. The "second and subsequent stages" refers to repeated, similar dehydration steps after completion of the first stage with the total volume, followed by addition of dilution water and stirring. Rate of Displacement Washing D0 (first stage) = A0 / (X0 + Y0)
X0: amount of water contained in pulp before dehydration = amount of aqueous dispersion of pulp before dehydration - pulp concentration before dehydration × amount of aqueous dispersion of pulp before dehydration
Y0: amount of water contained in pulp after dehydration = amount of aqueous dispersion of pulp after dehydration - pulp concentration after dehydration × amount of aqueous dispersion of pulp after dehydration
A0: amount of filtrate after dehydration Rate of displacement washing Dn (second and subsequent stages) = Dn-1 + An × (1 - Dn-1) / (Xn + Yn)
Dn-1: rate of displacement washing in previous stage
Xn: amount of water contained in pulp before dehydration = amount of aqueous dispersion of pulp before dehydration - pulp concentration before dehydration × amount of aqueous dispersion of pulp before dehydration
Yn: amount of water contained in pulp after dehydration - amount of aqueous dispersion of pulp after dehydration - pulp concentration after dehydration × amount of aqueous dispersion of pulp after dehydration
An: amount of filtrate after dehydration

According to the present embodiment, the rate of displacement washing is preferably 80% or higher. Where it is difficult to achieve the rate of washing of 80% or higher through one cycle of dehydration and washing, it is preferred to repeat the dehydration and washing several times of cycles to effect dilution, dehydration, and washing until the rate of 80% or higher is achieved.

### <Bleaching>

The carbamated cellulose fibers are bleached with a bleaching agent added thereto.

The bleaching agent may be, for example, sodium hypochlorite, sodium dichloroisocyanurate, hydrogen peroxide, sodium percarbonate, sodium perborate, ozone, chlorine dioxide, monopersulfate, potassium permanganate, persulfates, such as ammonium peroxodisulfate, sodium persulfate, or potassium monopersulfate (potassium peroxymonosulfate), hydrosulfite, or thiourea dioxide, with potassium peroxymonosulfate being preferred. The above-mentioned bleaching agents may be used in combination.

In this regard, sodium hypochlorite may react with a compound having an aromatic ring, such as residual lignin, to produce chlorinated dioxin, so that potassium peroxymonosulfate is preferred in view of environment. Further, hydrogen peroxide, which has a weaker oxidizing power compared to that of potassium peroxymonosulfate, is required to be added in a larger amount, reacted for a longer time, or reacted at an elevated temperature, so that potassium peroxymonosulfate is preferred. Hydrogen peroxide may, in the presence of a metal salt in the system, disproportionate to hydroxy radicals to attack cellulose and affect the pulp viscosity. Cellulose is denatured by heating to form a conjugated double bond, and discolored by absorption of visible light, while carbamation reaction of cellulose causes Maillard reaction together with amino acid and reducing sugar to produce brownish substance. The chlorine bleaching agents, such as sodium hypochlorite, may eliminate not only the double bond, which leads to coloration, but also carbamate groups, resulting in a reduced amount of introduced carbamate groups. Bleaching with hydrogen peroxide calls for strongly alkaline conditions of pH 10 or higher, which may also cause elimination of carbamate groups. In sum, bleaching agents that may be used over neutral to acidic regions, such as ozone, chlorine dioxide, monopersulfate, sodium persulfate, potassium permanganate, and ammonium peroxodisulfate, are preferred, and potassium peroxymonosulfate, which does not cause radical reaction, is preferred since undesired side reaction may occur in radical reaction.

For bleaching with a bleaching agent, the reaction conditions are preferably at 90 degrees or lower and pH 7 or lower, more preferably at 10 to 90 degrees and pH 2 to 7, particularly preferably at 30 to 90 degrees and pH 4 to 7. At a reaction temperature over 90 °C, the bleaching agent may be decomposed, leading to a reduced bleaching effect and plateau of reaction efficiency. This condition also leads to a reaction at an elevated pressure, which requires a large amount of energy. At a reaction temperature below 10 degrees, the bleaching agent may not dissolve and remain in the solvent. Further, the reaction rate may be significantly lowered, leading to a prolonged reaction time. On the other hand, over pH 7, carbamate groups may be eliminated, leading to a reduced amount of introduced carbamate groups.

When the bleaching agent is potassium peroxymonosulfate, the amount to be added is preferably 1 to 100 kg/pt, more preferably 3 to 80 kg/pt, particularly preferably 5 to 50 kg/pt. With less than 1 kg/pt of potassium peroxymonosulfate, sufficient bleaching effect may not be achieved. On the other hand, with over 100 kg/pt of potassium peroxymonosulfate, not only the effects commensurate with the amount added may not be achieved, but also the fiber length may be short and the reinforcing effect on resin may be lower.

### <Pretreatment>

The bleached carbamated cellulose fibers may be pretreated by a chemical method prior to being made finer (defibration). Such pretreatment by a chemical method may be, for example, hydrolysis of polysaccharides with acid (acid treatment), hydrolysis of polysaccharides with enzyme (enzyme treatment), swelling of polysaccharides with alkali (alkali treatment), oxidation of polysaccharides with an oxidizing agent (oxidation treatment), or reduction of polysaccharides with a reducing agent (reduction treatment). Among these, as a pretreatment by a chemical method, enzyme treatment is preferred, and more preferred is one or more treatments selected from acid treatment, alkali treatment, and oxidation treatment, in addition to the enzyme treatment. The enzyme treatment is discussed in detail below.

Note that the bleaching discussed above is whitening by oxidizing or reducing the substance responsible for coloring (mainly, molecules having a conjugated double bond, such as lignin or caramel reactant) to be soluble in water, and discharging the same with the filtrate out of the system. On the other hand, the enzyme treatment to be discussed below is for facilitating the fibers to be made finer, merely by decomposing cellulose into glucose.

As an enzyme used in the enzyme treatment, preferably at least one of, more preferably both of cellulase enzymes and hemicellulase enzymes are used. With such enzymes, defibration of the cellulose raw material is more facilitated. It is noted that cellulase enzymes cause degradation of cellulose in the presence of water, whereas hemicellulase enzymes cause degradation of hemicellulose in the presence of water.

The cellulase enzymes may be enzymes produced by, for example, the genus Trichoderma (filamentous fungus), the genus Acremonium (filamentous fungus), the genus Aspergillus (filamentous fungus), the genus Phanerochaete (basidiomycete), the genus Trametes (basidiomycete), the genus Humicola (filamentous fungus), the genus Bacillus (bacteria), the genus Schizophyllum (bacteria), the genus Streptomyces (bacteria), and the genus Pseudomonas (bacteria). These cellulase enzymes are available as reagents or commercial products. Examples of the commercial products may include, for example, Cellulosin T2 (manufactured by HBI ENZYMES INC.), Meicelase (manufactured by MEIJI SEIKA PHARMA CO., LTD.), Novozyme 188 (manufactured by NOVOZYMES), Multifect CX10L (manufactured by GENENCOR), and cellulase enzyme GC220 (manufactured by GENENCOR).

The cellulase enzymes may also be either EG (endoglucanase) or CBH (cellobiohydrolase). EG and CBH may be used alone or in mixture, or further in mixture with hemicellulase enzymes.

The hemicellulase enzymes may be, for example, xylanase, which degrades xylan; mannase, which degrades mannan; or arabanase, which degrades araban. Pectinase, which degrades pectin, may also be used.

Hemicellulose is a polysaccharide other than pectin, which is present among cellulose microfibrils of plant cell walls. Hemicellulose has numeral varieties and varies depending on the kinds of wood and among cell wall layers. Glucomannan is a major component in the secondary walls of softwood, whereas 4-O-methylglucuronoxylan is a major component in the secondary walls of hardwood. Thus, use of mannase is preferred for obtaining fine fibers from softwood bleached kraft pulp (NBKP), whereas use of xylanase is preferred for obtaining fine fibers from hardwood bleached kraft pulp (LBKP).

The amount of the enzyme to be added to the cellulose fibers may depend on, for example, the kind of enzyme, the kind of wood (either softwood or hardwood) used as a raw material, or the kind of mechanical pulp. The amount of the enzyme to be added may preferably be 0.1 to 3 mass%, more preferably 0.3 to 2.5 mass%, particularly preferably 0.5 to 2 mass%, of the amount of the cellulose fibers. With the amount of the enzyme below 0.1 mass%, sufficient effect due to the addition of the enzyme may not be obtained. With the amount of the enzyme over 3 mass%, cellulose may be saccharified to lower the yield of the fine fibers. A problem also resides in that improvement in effect worth the increased amount to be added may not be observed.

When a cellulase enzyme is used as the enzyme, the enzyme treatment is preferably carried out at a pH in a weakly acidic region (pH = 3.0 to 6.9) in view of the enzymatic reactivity. On the other hand, when a hemicellulase enzyme is used as the enzyme, the enzyme treatment is preferably carried out at a pH in a weakly alkaline region (pH = 7.1 to 10.0).

Irrespective of whether a cellulase enzyme or a hemicellulase enzyme is used as the enzyme, the enzyme treatment is carried out at a temperature of preferably 30 to 70 °C, more preferably 35 to 65 °C, particularly preferably 40 to 60 °C. At a temperature of 30 °C or higher, the enzymatic activity is hard to be lowered, and prolongation of the treatment time may be avoided. At a temperature of 70 °C or lower, enzyme inactivation may be avoided.

The duration of the enzyme treatment may depend on, for example, the type of the enzyme, the temperature in the enzyme treatment, and the pH in the enzyme treatment. Generally, the duration of the enzyme treatment is 0.5 to 24 hours.

After the enzyme treatment, the enzyme is preferably inactivated. Inactivation of enzymes may be effected by, for example, addition of an alkaline aqueous solution (preferably at pH 10 or higher, more preferably at pH 11 or higher) or addition of 80 to 100 °C hot water.

Next, the alkali treatment is discussed.

Alkali treatment prior to the defibration causes partial dissociation of hydroxy groups in hemicellulose or cellulose in pulp, resulting in anionization of the molecules, which weakens intra- and intermolecular hydrogen bonds to promote dispersion of the cellulose fibers during the defibration.

As the alkali used in the alkali treatment, for example, sodium hydroxide, lithium hydroxide, potassium hydroxide, an aqueous ammonia solution, or organic alkali, such as tetramethylammonium hydroxide, tetraethylammonium hydroxide, tetrabutylammonium hydroxide, and benzyltrimethylammonium hydroxide may be used. In view of the manufacturing cost, sodium hydroxide is preferably used.

The enzyme treatment, acid treatment, or oxidation treatment prior to the defibration may result in a lower water retention, a higher degree of crystallinity, and also higher homogeneity of the cellulose fibers. In this regard, cellulose fibers at a lower water retention is easily dewatered, so that dewaterability of a cellulose fiber slurry may be improved.

The enzyme treatment, acid treatment, or oxidation treatment of the cellulose fibers causes decomposition of the amorphous region of hemicellulose and cellulose in the cellulose fibers, which leads to reduction of energy required for the defibration and to improvement in uniformity and dispersibility of the cellulose fibers. The pretreatment, however, lowers the aspect ratio of the cellulose fibers, and it is thus preferred to avoid excessive pretreatment for the purpose of using the cellulose fibers as a reinforcing material for resins.

### <Making Fibers Finer>

The cellulose fibers which have been subjected to the bleaching, pretreatment, or the like, is made finer (defibrated). The cellulose fibers may be made finer by beating the cellulose fibers in, for example, beaters, homogenizers, such as high-pressure homogenizers and high-pressure homogenizing apparatus, millstone friction machines, such as grinders and mills, single-screw kneaders, multi-screw kneaders, kneaders, refiners, and jet mills. It is preferred to use refiners or jet mills.

According to the present embodiment, the fibrous cellulose (cellulose fibers), which is fine fibers, is preferably microfiber cellulose (microfibrillated cellulose) having an average fiber diameter of 0.1 µm or larger. Microfiber cellulose significantly enhances the reinforcing effect on resin.

More specifically, the microfiber cellulose means fibers of a larger average fiber width compared to cellulose nanofibers, specifically, e.g., 0.1 to 20 µm, preferably 0.2 to 15 µm, more preferably over 0.5 µm to 10 µm in average fiber diameter. With an average fiber diameter below (less than) 0.1 µm, the microfiber cellulose differs nothing from cellulose nanofibers, and sufficient effect to enhance resin strength (particularly flexural modulus) may not be achieved. Also, a longer time is required for defibration, which in turn requires more energy. Further, dewaterability of a cellulose fiber slurry is impaired. With such an impaired dewaterability, a high amount of energy is required for drying, which in turn may cause thermal deterioration of the microfiber cellulose to impair its strength. On the other hand, with an average fiber diameter over (exceeding) 20 µm, the microfiber cellulose differs nothing from pulp, and sufficient reinforcing effect may not be achieved.

The average fiber diameter of the fine fibers (microfiber cellulose and cellulose nanofibers) may be determined as follows.

First, 100 ml of an aqueous dispersion of fine fibers having a solid concentration of 0.01 to 0.1 mass% is filtered through a TEFLON (registered trademark) membrane filter, and subjected to solvent substitution once with 100 ml of ethanol and three times with 20 ml of t-butanol. Then the resulting mass is lyophilized and coated with osmium to obtain a sample. An SEM image of this sample is observed at a magnification of 3000 to 30000 folds, depending on the width of the constituent fibers. Specifically, two diagonal lines are drawn on the observation image, and three arbitrary straight lines passing the intersection of the diagonals are drawn. Then, the widths of a total of 100 fibers crossing these three straight lines are visually measured. The median diameter of the measured values is taken as the average fiber width.

The average fiber length (average of lengths of single fibers) of the microfiber cellulose is preferably 0.1 to 2.0 mm, more preferably 0.2 to 1.5 mm, particularly preferably 0.3 to 1.2 **mm.** With an average fiber length below 0.1 mm, the fibers may not be able to form three dimensional networks among them, resulting in lowered reinforcing effect (particularly, flexural modulus) on resin. With an average fiber length over 2.0 mm, the length of the microfiber cellulose differs nothing from that of the raw material pulp, so that the reinforcing effect may not be sufficient.

The average fiber length of cellulose fibers, which are a raw material of the microfiber cellulose, is preferably 0.50 to 5.00 mm, more preferably 1.00 to 3.00 mm, particularly preferably 1.50 to 2.50 mm. With an average fiber length of the cellulose raw material below 0.50 mm, sufficient reinforcing effect on resin may not be achieved after defibration. With an average fiber length over 5.00 mm, manufacturing cost incurred in defibration may be disadvantageous.

It is conceivable that the percentage of decrease in fiber length before and after the bleaching may preferably be 50% or lower.

The average fiber length of the microfiber cellulose may arbitrarily be adjusted by, for example, selection, pretreatment, or defibration of the raw material pulp.

The fine percentage A (fine fiber percentage A) of the microfiber cellulose is preferably 10 to 90%, more preferably 20 to 60%, particularly preferably 25 to 50%. At a fine percentage A of 10% or higher, higher percentage of homogeneous fibers is present, which hardly causes progress of deterioration of the composite resin. However, at a fine percentage A over 90%, the flexural modulus may be insufficient.

The fine percentage A of the microfiber cellulose has been discussed above, and it is still more preferred to adjust the fine percentage A of also cellulose fibers, which are a raw material of microfiber cellulose, to fall within a predetermined range. Specifically, the fine percentage A of the cellulose fibers, which are a raw material of microfiber cellulose, is preferably 1% or higher, more preferably 3 to 25%, particularly preferably 5 to 20%. With the fine percentage A of the cellulose raw material before defibration falling within the above range, the fibers undergo less damage even when the microfiber cellulose is defibrated into microfiber cellulose with a fine percentage A of 10% or higher, resulting in improved reinforcing effect on resin.

The fine percentage B (fine fiber percentage B) of the microfiber cellulose is preferably 1 to 75%, more preferably 10 to 75%, particularly preferably 35 to 75%. At a fine percentage B below 1%, a larger amount of fibers have shorter fiber lengths or a larger amount of fibers have larger fiber widths, which may lead to insufficient reinforcing effect. On the other hand, at a fine percentage B over 75%, a larger amount of fibers are thin and long, which may lead to entangling of the fibers. The entangled fibers, like a foreign matter, may be a trigger to fracture of the resulting composite resin upon external impact, to deteriorate bending properties or impact resistance of the composite resin.

Adjustment of the fine percentages A and B may be effected simultaneously with the bleaching by the addition of potassium peroxymonosulfate, as discussed above. However, addition of an excess amount of potassium peroxymonosulfate may cause the cellulose to have a lower molecular weight and impaired rigidity, which may deteriorate the reinforcing effect on resin. In light of this, the amount of potassium peroxymonosulfate to be added is preferably 1 to 100 kg/pt, more preferably 3 to 80 kg/pt, particularly preferably 5 to 50 kg/pt.

According to the present embodiment, the "fine percentage A (fine fiber percentage A)" refers to the percentage in terms of mass of the cellulose fibers having a fiber length of 0.2 mm or shorter and a fiber width of 75 µm or smaller. Similarly, the "fine percentage B (fine fiber percentage B)" refers to the percentage in terms of mass of the cellulose fibers having a fiber length over 0.2 mm and a fiber width of 10 µm or smaller.

The fiber length or the like of cellulose fibers is measured using a fiber analyzer FS5 manufactured by Valmet K.K.

The aspect ratio of the microfiber cellulose is preferably 2 to 15000, more preferably 10 to 10000. With an aspect ratio below 2, the microfiber cellulose may not be able to form three dimensional networks among them, resulting in poor reinforcing effect even with an average fiber length over 0.02 mm. On the other hand, with an aspect ratio over 15000, the microfiber cellulose tends to be highly entangled, which may lead to insufficient dispersion in the resin.

An aspect ratio is a value obtained by dividing the average fiber length by the average fiber width. A larger aspect ratio causes a larger number of locations to be caught, which enhances the reinforcing effect but, as such, is assumed to result in lower ductility of the resin.

The percentage of fibrillation of the microfiber cellulose is preferably 1.0 to 30.0%, more preferably 1.5 to 20.0%, particularly preferably 2.0 to 15.0%. With a percentage of fibrillation over 30.0%, the area of contact with water is too large, which may make the dehydration difficult even when the defibration results in the average fiber width within a range of 0.1 µm or larger. With a percentage of fibrillation below 1.0 %, the hydrogen bonding between the fibrils may be too little to form firm three dimensional networks.

As use herein, the percentage of fibrillation refers to the value determined by disintegrating cellulose fibers in accordance with JIS-P-8220: 2012 "Pulp - Laboratory wet disintegration", and measuring the disintegrated pulp with FiberLab manufactured by KAJAANI.

The degree of crystallinity of the microfiber cellulose is preferably 50% or higher, more preferably 55% or higher, particularly preferably 60% or higher. With a degree of crystallinity below 50%, the mixability with pulp or cellulose nanofibers may be improved, whereas the strength of the fibers per se may be lowered to make it difficult to enhance the strength of resin. On the other hand, the degree of crystallinity of the microfiber cellulose is preferably 95% or lower, more preferably 90% or lower, particularly preferably 85% or lower. With a degree of crystallinity over 95%, the ratio of firm hydrogen bonding within the molecules is high, which makes the fibers themselves rigid and impairs dispersibility.

The degree of crystallinity of the microfiber cellulose may arbitrarily be adjusted by, for example, selection, pretreatment, or making finer of the raw material pulp.

The degree of crystallinity is a value determined in accordance with JIS K 0131 (1996).

The pulp viscosity of the microfiber cellulose is preferably 2 cps or higher, more preferably 4 cps or higher. With a pulp viscosity of the microfiber cellulose below 2 cps, control of aggregation of the microfiber cellulose may be difficult.

The pulp viscosity is a value determined in accordance with TAPPI T 230.

The freeness of the microfiber cellulose is preferably 500 ml or less, more preferably 300 ml or less, particularly preferably 100 ml or less. With a freeness of the microfiber cellulose over 500 ml, the average fiber diameter of the microfiber cellulose is over 10 µm, and sufficient effect to enhance resin strength may not be obtained.

The freeness is a value determined in accordance with JIS P8121-2 (2012).

The zeta potential of the microfiber cellulose is preferably -150 to 20 mV, more preferably -100 to 0 mV, particularly preferably -80 to -10 mV. With a zeta potential below -150 mV, compatibility with resins may significantly be deteriorated, resulting in insufficient reinforcing effect. With a zeta potential over 20 mV, dispersion stability may be impaired.

### <Slurry>

The microfiber cellulose is dispersed in an aqueous medium to prepare a dispersion (slurry), as needed. The aqueous medium is particularly preferably water in its entirety, but aqueous medium partly containing another liquid compatible with water may also be used. Such another liquid may be, for example, a lower alcohol having 3 or less carbon atoms.

The solid concentration of the slurry is preferably 0.1 to 10.0 mass%, more preferably 0.5 to 5.0 mass%. With a solid concentration below 0.1 mass%, an excessive amount of energy may be required for dewatering and drying. With a solid concentration over 10.0 mass%, fluidity of the slurry per se may be too low to homogeneously admix with the dispersant, when used.

### <Other Components>

The cellulose fibers may contain cellulose nanofibers in addition to the microfiber cellulose. Cellulose nanofibers are fine fibers, like microfiber cellulose, and have a role to complement the microfiber cellulose in enhancing the strength of resin. However, the fine fibers are preferably only the microfiber cellulose without cellulose nanofibers, where possible. Note that the average fiber diameter (average fiber width, or average of diameters of single fibers) of the cellulose nanofibers is preferably 4 to 100 nm, more preferably 10 to 80 nm.

Further, the cellulose fibers may contain pulp. Pulp has a role to remarkably improve the dewaterability of a cellulose fiber slurry. Like the cellulose nanofibers, however, it is most preferred that the pulp is also not contained, that is, at a content percentage of 0 mass%.

### EXAMPLES

Next, Examples of the present invention will now be discussed.

In each of Test Examples 1 to 9, 15, and 16, carbamate-modified cellulose was obtained according to the following procedure.

First, to a pulp slurry, a sizing agent was added, and a pulp sheet was prepared to have particular degree of KBB sizing and basis weight. Then, the resulting pulp sheet was passed to a coating facility, where the pulp sheet was coated with an aqueous solution of urea having a 40% solid content so that a particular ratio of pulp to urea (pulp : urea) in terms of solid content was achieved, followed by drying with an after-dryer, to obtain a urea-coated paper. The urea-coated paper thus obtained was subjected to reaction in a roll-to-roll reactor at a particular temperature for a particular period of time, to thereby obtain carbamate-modified cellulose.

On the other hand, in each of Test Examples 10 to 14 and 17, carbamate-modified cellulose was obtained according to the following procedure.

First, softwood kraft pulp with a moisture percentage of 10% or lower was soaked in a 30% aqueous solution of urea at a particular ratio to prepare a mixture, which was dried at 105 °C and heat treated at a reaction temperature of 160 °C for a reaction time of 1 hour, to thereby obtain carbamate-modified cellulose. The details of the above procedure is also shown in Table **2.**

**[Table 1]**

| | Conditions of Bleaching | | | | | | | | | | |
|---|---|---|---|---|---|---|---|---|---|---|---|
| | Name of Chemical | Specific Chemical Consumption | Reaction Temperature | Reaction Time | pH | Brightness after Bleaching | Bnghtness before Modification | Brightness Recovery Ratio | Amount of Introduced Carbamate Groups before Bleaching | Amount of Introduced Carbamate Groups after Bleaching | Percentage of Decrease in Amount of Introduced Carbamate Groups |
| | | kg/pt | °C | h | | % | % | | mmol/g | mmol/g | % |
| TestEx 1 | Potassium Peroxymonosulfate | 5 | 70 | 3 | 6 | 75 5 | 82.1 | 0 92 | 0 81 | 0.80 | -0.3 |
| TestEx. 2 | Potassium Peroxymonosulfate | 10 | 70 | 3 | 6 | 76 0 | 82 1 | 0 93 | 0 81 | 0.78 | -3.0 |
| TestEx. 3 | Potassium Peroxymonosulfate | 50 | 70 | 3 | 6 | 82 8 | 82.1 | 1.01 | 0 81 | 0.79 | -2.5 |
| TestEx 4 | Potassium Peroxymonosulfate | 10 | 70 | 3 | 4 | 801 | 82 1 | 0.98 | 0 81 | 077 | 44 |
| TestEx. 5 | Potassium Peroxymonosulfate | 10 | 70 | 3 | 8 | 727 | 82.1 | 0.89 | 0.75 | 067 | -9.9 |
| TestEx 6 | Potassium Peroxymonosulfate | 10 | 70 | 3 | 9 | 75 3 | 82.1 | 0 92 | 0.75 | 0.66 | -12.1 |
| TestEx 7 | Potassium Peroxymonosulfate | 10 | 100 | 3 | 6 | 76 2 | 82 1 | 0 93 | 0.78 | 068 | -12.1 |
| TestEx 8 | None | - | 70 | 3 | - | 676 | 82.1 | 0 82 | 0 75 | 0.75 | 0.0 |
| TestEx. 9 | None | - | 70 | 3 | - | 68.5 | 82.1 | 0.83 | 0 81 | 0.81 | 0.0 |
| TestEx. 10 | Hydrogen Peroxide | 40 | 70 | 3 | 7 | 70.5 | 767 | 0.92 | 1.52 | 1.43 | -5.9 |
| Test Ex. 11 | Hydrogen Peroxide | 40 | 70 | 3 | 8 | 74.3 | 767 | 0 97 | 1 52 | 1.53 | 0.5 |
| Test Ex. 12 | Hydrogen Peroxide | 40 | 70 | 3 | 9 | 74.0 | 767 | 0.96 | 1 52 | 1.07 | -296 |
| Test Ex. 13 | Hydrogen Peroxide | 40 | 70 | 3 | 10 | 73.8 | 767 | 0.96 | 1.52 | 1 21 | -20.5 |
| Test Ex. 14 | Hydrogen Peroxide | 40 | 70 | 3 | 11 | 81.6 | 767 | 1.06 | 1.52 | 0.91 | 400 |
| Test Ex. 15 | Hydrogen Peroxide | 40 | 100 | 3 | 7 | 77.9 | 82.1 | 0 95 | 0.78 | 0.72 | -6.9 |
| TestEx. 16 | None | - | 100 | 3 | 7 | 70.2 | 82.1 | 0.86 | 0.78 | 078 | 0.0 |
| Test Ex. 17 | None | - | 70 | 3 | - | 61.1 | 767 | 0.80 | 1 52 | 1 52 | 0.0 |

**[Table 2]**

| | Base Paper and Reaction Conditions | | | | | |
|---|---|---|---|---|---|---|
| | Pulp Mixing Ratio (%) | | Basis Weight | Degree of KBB Sizing | Reaction Temperature | Reaction Time |
| | NBKP | LBKP | g/m² | 9 | °C | |
| Text Ex. 1 | 80 | 20 | 100 | 150 | 260 | 10 sec |
| Text Ex. 2 | 80 | 20 | 100 | 150 | 260 | 10 sec |
| Text Ex. 3 | 80 | 20 | 100 | 150 | 260 | 10 sec |
| Text Ex. 4 | 80 | 20 | 100 | 150 | 260 | 10 sec |
| Text Ex. 5 | 80 | 20 | 100 | 150 | 260 | 10 sec |
| Text Ex. 6 | 80 | 20 | 100 | 150 | 260 | 10 sec |
| Text Ex. 7 | 80 | 20 | 100 | 150 | 260 | 10 sec |
| Text Ex. 8 | 80 | 20 | 100 | 150 | 260 | 10 sec |
| Text Ex. 9 | 80 | 20 | 100 | 150 | 260 | 10 sec |
| Text Ex. 10 | 100 | 0 | 100 | 150 | 160 | 1 hr |
| Text Ex. 11 | 100 | 0 | 100 | 150 | 160 | 1 hr |
| Text Ex. 12 | 100 | 0 | 100 | 150 | 160 | 1 hr |
| Text Ex. 13 | 100 | 0 | 100 | 150 | 160 | 1 hr |
| Text Ex. 14 | 100 | 0 | 100 | 150 | 160 | 1 hr |
| Text Ex. 15 | 80 | 20 | 100 | 150 | 260 | 10 sec |
| Text Ex. 16 | 80 | 20 | 100 | 150 | 260 | 10 sec |
| Text Ex. 17 | 100 | 0 | 100 | 150 | 160 | 1 hr |

After the carbamate-modified cellulose was obtained in this way, bleached carbamate-modified cellulose was prepared according to the following procedure.

First, the carbamate-modified cellulose was diluted with water to have a solid concentration of 5%, and disintegrated in a disintegrating machine. The aqueous dispersion of the carbamate-modified cellulose obtained from the disintegration was subjected to two cycles of dehydration and washing.

Each carbamate-modified cellulose obtained in this way was bleached according to the following method. The washed carbamate-modified cellulose was adjusted to have a particular concentration, to which a bleaching agent was added in a particular amount, and the resulting mass was left to stand for a particular period of time in a water bath maintained at a particular temperature, to thereby obtain bleached carbamate-modified cellulose. The pH during the bleaching was adjusted with an aqueous solution of sodium hydroxide. The obtained bleached carbamate-modified cellulose was diluted with distilled water under stirring, and subjected to two cycles of dehydration and washing, to thereby obtain washed bleached carbamate-modified cellulose.

With respect to the bleached carbamated cellulose fibers thus obtained in each of the Test Examples, the brightness recovery ratio and the percentage of decrease in the amount of introduced carbamate groups are shown in Table **1.** Note that the brightness recovery ratio refers to a value calculated by dividing the brightness after bleaching by the brightness before modification ("brightness after bleaching" / "brightness before modification"). The brightness was determined in accordance with JIS P8148. The percentage of decrease in the amount of introduced carbamate groups refers to a value calculated by "(amount of introduced carbamate groups before bleaching - amount of introduced carbamate groups after bleaching) / amount of introduced carbamate groups before bleaching × 100". As the potassium peroxymonosulfate, OXONE manufactured by TOKYO CHEMICAL INDUSTRY CO., LTD. (TCI), model 00164, was used. Incidentally, in Test Example 11, the percentage of decrease in the amount of introduced carbamate groups was observed to be positive, which appears to be a measurement error.

### <Discussion>

These results suggest that the upper limit of the reaction temperature is 90 °C for the following reasons.

That is, the reaction temperature is controlled by heating the reaction mass when its temperature becomes too low, and ceasing the heating when the temperature becomes too high. In other words, the temperature, when exceeds 90 °C, is not positively lowered, but is left to lower passively. Thus, when the upper limit of the reaction temperature is set over 90 °C, the reaction temperature may reach 100 °C for a moment, which may cause increase in pressure in the reaction system, resulting in undesired reactions, such as decomposition of fibers, other than the intended bleaching reaction. Thus, for an increased reaction efficiency, a reaction temperature as high as possible is desired, but disadvantage caused at a reaction temperature of 100 °C or higher is significantly large. In this light, the reaction temperature is required to be controlled to fall within a range not reaching 100 °C, and the upper limit of the reaction temperature is thus assumed to be 90 °C. Incidentally, at a reaction temperature of 100 °C or higher, disadvantages may result, such as reduction in the amount of introduced carbamate groups, or necessity for a pressure vessel. The results of the above tests clearly indicate that the reaction temperature of 100 °C or higher is not preferred.

### INDUSTRIAL APPLICABILITY

The present invention is applicable as a method for preparing carbamated cellulose fibers and a method for preparing carbamated cellulose fine fibers.

## Claims

1. A method for preparing carbamated cellulose fibers, comprising:
adding a bleaching agent to carbamated cellulose fibers; and
bleaching the carbamated cellulose fibers with the bleaching agent at a reaction temperature of 90 degrees or lower at pH 7 or lower.

2. The method for preparing carbamated cellulose fibers according to claim 1, wherein the bleaching agent is a peroxymonosulfate.

3. The method for preparing carbamated cellulose fibers according to claim 2, wherein an amount of the peroxymonosulfate to be added to the cellulose fibers is 1 to 100 kg/pt.

4. The method for preparing carbamated cellulose fine fibers comprising making carbamated cellulose fibers finer,
wherein the carbamated cellulose fibers are carbamated cellulose fibers obtained from the method of claim 1 and having 0.5 mmol/g or more carbamate groups introduced therein, and
wherein the making carbamate cellulose fibers finer is effected so that resulting carbamated cellulose fine fibers have an average fiber width of 0.1 to 20 µm, an average fiber length of 0.1 to 2.0 mm, and a fine percentage A of 10 to 90%.
